# EUROPEAN PATENT APPLICATION

(11) **EP 4 826 337 A1**
(43) Date of publication of application: **21.10.2026**
(21) Application number: 25171269.1
(22) Date of filing: 17.04.2025
(51) Int. Cl.: G01C 21/36, G01C 21/00, G06N 3/02

(54) **SOURCE-TRANSPARENT NAVIGATION**

(71) Applicant: HERE Global B.V., 5611 ZT Eindhoven (NL)
(72) Inventor: Beaurepaire, Jerome, 92400 Nantes (FR); Timmer, Remco, 1082 Amsterdam (NL); Derin, Onur, 5613SG Eindhoven (NL); Kondrashov, Oleksandr, 10115 Berlin (DE)
(74) Representative: Sariot, Eray

(57) **Abstract**

Apparatuses, methods, system and computer program products for navigation are disclosed. An apparatus comprises means for obtaining at least one piece of information about a map element based on a source of information, means for obtaining an indication of a degree of reliability of the at least one piece of information based on the source of information, and means for providing the at least one piece of information in a way indicating the degree of reliability of the at least one piece of information to a recipient.

## Description

### TECHNOLOGICAL FIELD

The present disclosure is related to but not limited to navigation systems, apparatus and methods, in particular to information about map elements (e.g., locations and/or destination), in particular for navigation based on information originating from multiple sources of information.

### BACKGROUND

Navigation systems are today often used, inter alia, as a primary interface to navigate the physical world. Their application thus goes far beyond a computation of a fast route to a given destination. Instead, navigation systems have evolved to provide various pieces of information to the user, e.g., relating to elements (e.g., called map elements) (e.g., stores, restaurants and/or shops) having one or more locations and thus being at least remotely related to navigation.

It has been recognized that navigation systems obtain (e.g., source) information from various information sources. It has further been recognized that information sources differ in a reliability of the respectively provided information. Information may be outdated more often (e.g., for a larger share of provided information) for some sources of information than for others.

### SUMMARY OF SOME EXEMPLARY EMBODIMENTS

It has in particular been recognized that an increasingly relevant source of information, namely generative (e.g., language-processing) machine learning models, in particular large language models, LLM, have a promise of providing detailed information about map elements. Yet at the same time, it has been recognized that knowledge provided by such machine learning models typically has been learned at a first time, based on training data of a given recency, and that afterwards, such knowledge may be retrieved and/or used to generate output at a second, later time. **In** other words, a recency of knowledge provided by a machine learning model may be limited to the recency of its training and/or the recency of training data on which a training is based. The requirement to train a model has further been recognized to itself impose a minimum limitation on recency of information because training takes time (e.g., a training duration, e.g., a day), i.e., even right after a pre-trained machine learning model has finished training, the training data used to this end must have been available before the training started. Thus, the model can only achieve a recency of "real time minus training duration" (e.g., now minus one day). No fully up-to-date information (e.g., traffic information reported in the last 10min) can be reflected by the output from a pre-trained machine learning model. In practice, training data is often of much lower recency (e.g., weeks, months or years old), e.g., in relation to a training time and/or to a time at which an output from a pre-trained machine learning model is generated.

This is in contrast to other sources of information such as internet sources which may be updated on a frequent (e.g., daily) basis. Such source may moreover be queried at any given time without the intermediate step of re-training a model based on the available data and only subsequently accessing the re-trained model. Even if the information obtained from an internet source has not been updated right before or even at the time of querying, the information provided may still be as up-to-date as currently available on the internet. This may be denoted as "up-to-date internet source". The internet source may still be considered up-to-date even if the information it provides is not captured from a corresponding real world state in real time but is for instance a few days or even weeks old, for instance as long as its recency of information reflects an average delay between a state of the real world of which the information is informative and a typical coverage of such a change by internet services. The average delay may instance typically reflect the rate of change of a corresponding process in the real world. For instance, for a weather service, an up-to-date internet source may be required to have at most 1 hour delay between a current weather at a location and an information provided about the weather. In case of a museum hosting only a permanent exhibition, information may be dated by a few months and still be considered up-to-date.

A problem may arise when a user of a navigation system is unaware and/or unsure what source of information a given piece of information originates from and whether a recency of this piece of information is to be trusted or not. As a result, at least in some cases outdated information may be trusted for navigation purposes and therefore, detours to unsuitable locations and/or on unsuitable roads and/or using unsuitable transport means may be performed, thereby wasting the time of users, causing pollution and traffic overhead.

It is thus one of the objects of the present disclosure to ensure pertinent navigation in presence of different (e.g., heterogeneous) sources of information.

According to a first example aspect, a method is proposed, for instance performed and/or controlled by a terminal device, comprising (e.g., for navigation):
- obtaining at least one piece of information about a map element (e.g., traffic state (e.g., construction works), a point of interest (e.g., opening hours of a destination, prices of entrance and/or products and/or combinations thereof)), wherein the at least one piece of information is obtained based on (e.g., from) a source of information, wherein the source of information corresponds to one of:
   - a pre-trained machine learning model (e.g., a large language model), in particular wherein the respective of the at least one piece of information is based (e.g., corresponds to) on training data (e.g., corpus data) of a given recency, or
   - an up-to-date (e.g., updated at most 3M, 2M, 1M, 4w, 2w, 1w, 5d, 2d, or 1d ago) (e.g., wherein the information is requested in real time) internet source (e.g., obtained via an application programming interface, API; e.g., API-sourced),
- obtaining (e.g., jointly with the information) an (e.g., respective of a piece of information of the at least one piece of information) indication of a degree of reliability of the at least one piece of information based on the source of information, and
- providing the at least one piece of information in a way indicating the degree of reliability of the at least one piece of information to a recipient.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a node in a communication system and/or by a terminal device, e.g., a user equipment (UE). For instance, the method may be performed and/or controlled by using at least one processor of the electronic device.

According to a further example aspect, a computer program is disclosed, the computer program when executed by a processor causing an apparatus, for instance a server, a network node or a terminal device, e.g., a UE, to perform and/or control the actions of the method according to the first example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

A terminal device, e.g., a user equipment (UE), may for instance correspond to a mobile device such as for example a mobile phone, tablet, smartwatch, a laptop, a Personal Digital Assistant (PDA) device, a wearable, an Internet-of- Things (IOT) device, an IIOT (Industrial IOT) device, a vehicle and/or combinations thereof. Such a user equipment may also be referred to as user device.

The method comprises obtaining at least one piece of information about a map element.

A map element may relate to an entity that is suitable for being displayed on a map and/or in relation to a map. For instance, a map element may comprise a road, a crossing, a park, a city, a store, a restaurant, a bar, a sports center, a sharing station (e.g., for bikes and/or scooters), a public transport station, and/or combinations thereof.

The piece of information may for instance relate to the map element and/or specify at least one property of the map element. For instance, the piece of information may indicate a traffic state of a road or of a city (e.g., area), e.g., construction works may be indicated by the piece of information. The piece of information may relate to a property of a point of interest. For instance, such properties may relate to and/or comprise opening hours of a restaurant and/or shop (e.g., which may be a destination of a user), prices of entrance and/or of products and/or combinations thereof.

The at least one piece of information is obtained based on (e.g., from) a source of information. For instance, the piece of information may be received, e.g., from a different apparatus than an apparatus performing and/or controlling the method according to the first aspect, e.g., from an (e.g., online) information provisioning service. The method may comprise requesting the piece of information (e.g., as part of the obtaining) (e.g., from another apparatus). The at least one piece of information may additionally or alternatively be obtained from within the apparatus performing and/or controlling the method, for instance retrieved from a local memory and/or from a local generative mechanism, e.g., from a locally run large language model, LLM.

The at least one piece of information may comprise pieces of information stemming from mutually different sources of information. For instance, at least or at most 2, 2, 3, 4, 5, 6, 7, 8, 9, or 10 sources of information may be available for obtaining at least one respective piece of information. Alternatively, a piece of information may be obtained (e.g., always) from a single source of information.

According to a first option, the source of information may correspond to and/or comprise a pre-trained machine learning model (e.g., a large language model). The pre-trained machine learning model may also be run at a remote location with respect to an apparatus performing and/or controlling the method according to the first aspect and/or may be run by the apparatus itself (e.g., in offline scenarios wherein the apparatus has no connection to the internet).

In this case, the respective of the at least one piece of information obtained from the pre-trained machine learning model may be based on (e.g., may correspond to) training data used for training the pre-trained machine learning model. Such data may for instance be referred to as corpus data. The training data (e.g., a part of the training data relevant for the piece of information and/or forming a basis for the piece of information) may be of a given recency. For instance, the training data may have been obtained before a training time (e.g., by automatically crawling the word wide web). Training data may comprise information of various dates. For instance, a best achievable recency corresponds to the point in time at which the pre-trained machine learning model has been trained (e.g., fine-tuned) the last time. Information obtainable from the pre-trained machine learning model may thus be limited in recency to this point in time.

The pre-trained machine learning model may further be oblivious to a recency of data underlying pieces of information it has at its disposal and/or which it may use to generate output. It has therefore been recognized that a layer of safety and/or supplementary information may be advantageous which protects a user from outdated and/or inapplicable information provided by information sources such as in particular (e.g., generative) pre-trained machine learning models.

According to a second option, the source of information may correspond to and/or comprise an up-to-date internet source.

For instance, an up-to-date internet source may have been updated at most 3M, 2M, 1M, 4w, 2w, 1w, 5d, 2d, or 1d ago and/or be real-time (e.g., may retrieve and/or a current (e.g., not outdated by more than 1s, 10s, 30s, 1min, 2min, 5min or 10min) state of the real world. Whether an internet source is up-to-date may for instance be assessed based on a rate of change of the real world process of which the information source is informative. For instance, if a state of the real world informed by the information source change on average at a rate A (e.g., every day), updating the internet source every 2A (e.g., 2 days), A (e.g., day), A/2 (e.g., 12h), or A/4 (e.g., 6h) may render it an up-to-date internet source. For instance, the method may comprise requesting the piece of information from the up-to-date internet source and/or the obtaining may entail another apparatus requesting the piece of information in real time.

An up-to-date internet source may for instance be accessed via an application programming interface, API. For instance, an online service (e.g., a map data provider and/or a web service such as a weather service and/or a further knowledge source) may be accessed through an interface (e.g., via the internet) such as an API. An apparatus performing and/or controlling the method may thus contact (e.g., send a request to) the up-to-date internet source and may subsequently retrieve a response comprising at least a part of the piece of information.

A given piece of information may be partly obtained from a pre-trained machine learning model and partly from an up-to-date internet source.

The method further comprises obtaining an indication of a degree of reliability of the at least one piece of information based on the source of information.

A degree of reliability may for instance indicate whether the respective piece of information is reliable or not. Reliable may in this case for instance denote that the piece of information may be trusted, e.g., for navigation purposes, e.g., without further verification steps. For instance, the degree of reliability may indicate a probability (e.g., and/or indication) of a respective piece of information being outdated or not. For instance, a piece of information (e.g., existence of and/or opening hours of a restaurant) provided based on a machine learning model, e.g., wherein the machine learning model has been trained 1 year ago (e.g., and/or on 1 year old training data), may be associated with a low degree of reliability. A piece of information obtained from an up-to-date internet source, e.g., based on a recent (e.g., real-time) API, may be associated with a high (e.g., higher compared to a (e.g., any)(e.g., locally run or online) pre-trained machine learning model) degree of reliability.

For instance, the indication of the degree of reliability may be obtained jointly with the piece of information. For instance, a way of obtaining the piece of information and/or the source of information may indicate the degree of reliability. Additionally or alternatively, the degree of reliability may be obtained as an additional piece of information, e.g., a obtained jointly or separately from the piece of information about the map element.

For instance, the at least one piece of information about a map element may comprise two or more pieces of information. The indication of a degree of reliability may be obtained for a respective of the at least two pieces of information, e.g., wherein the degrees of reliability may differ from one another (e.g., due to the pieces of information originating from mutually different sources of information).

The method further comprises providing the at least one piece of information in a way indicating the degree of reliability of the at least one piece of information to a recipient.

The at least one piece of information may for instance be provided to a user (e.g., a user of an apparatus performing and/or controlling the method according to the first example aspect).

The providing the at least one piece of information may for instance comprise presenting the piece of information visually, for instance by means of a display (e.g., the apparatus performing and/or controlling the method according to the first example aspect). At least one display element (e.g., image, text, icon, and/or combinations thereof) may be used to this end. For instance, a part of a map may be displayed to a user (e.g., as part of guiding the user along a route).

The display element may be configured in a way that indicates the degree of reliability. For instance, the display element may display an indication of a respective source of information and/or of a (e.g., determined) probability that the piece of information can be trusted.

For instance, a color, size, position and/or combination thereof of a display element may be selected in a way that indicates reliability. Additionally or alternatively, an additional display element may be displayed which indicates the degree of reliability.

The piece of information may additionally or alternatively be provided auditorily, e.g., by an audio output through a speaker, e.g., comprising signal sounds and/or (e.g., artificial) speech. A way of providing a piece of information auditorily may for instance correspond to a selection of signal sound (e.g., frequency, volume, length and/or combinations thereof) and/or to a modulation of (e.g., artificial) speech (e.g., tone, speed of delivery, volume and/or combinations thereof). Additionally or alternatively, an additional audio cue may be provided for indicating a degree of reliability (e.g., an additional signal sound and/or an additional spoken word).

Additionally or alternatively to the user, a recipient of the piece of information may comprise a part of a computer system (e.g., part of and/or different from the apparatus performing and/or controlling the method according to the first example aspect), for instance a part of a navigation system. **In** this case, the way in which the piece of information is provided may for instance correspond to an additional indication (e.g., one or more additional bits or bytes) indicating the degree of reliability.

According to an embodiment of the first example aspect, the at least one piece of information is at least one of
- comprises more than one (e.g., a plurality of) pieces of information, in particular relating to a single map element (e.g., in case of a restaurant or similar such pieces of information may relate to time of arrival, opening hours, rating of food, outdoor seating, capacity, degree of occupancy, breakfast or lunch times and/or combinations thereof) wherein a respective indication of a respective degree of reliability is obtained for a respective of the pieces of information (e.g., wherein respective degrees of reliability may mutually differ, e.g., based on the respective pieces of information originating from mutually different sources of information).

Multiple pieces of information may be obtained. Such pieces of information may relate to mutually different map elements. Additionally or alternatively, at least two pieces of information may relate to a same map element (e.g., (1) opening hours (first piece of information) and (2) menu (e.g., prices) (second piece of information) of a restaurant (the map element)). Respective pieces of information (e.g., of a same map element) may be associated with different degrees of reliability. For instance, a first piece of information may be obtained from a pre-trained machine learning model and a second piece of information may be obtained from an up-to-date internet source (e.g., via API). Additionally or alternatively, at least two pieces of information (e.g., of a same map element) may be associated with a same degree of reliability.

According to an embodiment of the first example aspect, the map element is part of a (e.g., potential) route to a destination (e.g., and/or the map element is the destination).

For instance, a map element may be any sort of element suitable of being associated with and/or displayed on a map. According to an embodiment, the map element may be linked to routing. For instance, the map element may be part of a (e.g. potential) route to a destination, for instance, a road and/or a crossing and/or a public transport option. A piece of information may for instance correspond to a degree of traffic, construction works and/or departure times and/or trip durations. Additionally or alternatively, the map element may correspond to a (e.g., potential) destination (e.g., a restaurant, sports club, bar, school, work, shop, and/or combinations thereof).

A piece of information associated with a potential destination may for instance be used to select a destination. A piece of information associated with a part of a (e.g., potential) route may for instance be used for determining a route (e.g., to a destination). Pieces of information regarding different map elements may be provided (e.g., displayed) so that a recipient (e.g., user and/or further computing system), may be enabled to make an informed decision on navigating the real world.

According to an embodiment of the first example aspect, the recipient is at least one of
- a user of the apparatus performing and/or controlling the method, or
- a part of a computer system (e.g., an API, e.g., of the apparatus or of a different apparatus).

According to an embodiment of the first example aspect, the indication of the degree of reliability at least one of
- corresponds to the source of information (e.g., at least two reliability classes: (1) machine learning model vs (2) API; e.g., additionally (3) offline machine learning model), or
- is classified into one of (e.g., at least) three reliability classes comprising
   - from internet source,
   - from pre-trained machine learning model (e.g., potentially outdated), and
   - (e.g., potentially) outdated (e.g., based on a type of map element and/or on the machine learning model being run offline and/or locally on the apparatus).

The degree of reliability may be received and/or determined (e.g., by the apparatus performing and/or controlling the method according to the first example aspect).

A degree of reliability may for instance be quantified in a continuous way, e.g., by a continuous reliability score (e.g., real value between 0 (e.g., unreliable) and 1 (e.g., fully reliable)). Additionally or alternatively, the degree of reliability may be quantified as a class of reliability, e.g., class 1: unreliable, class 2: reliable; e.g., further class 3: probably reliable and/or class 4: probably unreliable.

The degree of reliability may for instance correspond to (e.g., be determined based on and/or as) the source of information. In other words, the degree of reliability may be fully defined by the source of information. E.g., a given source of information may (e.g., always) have a same degree of reliability associated to it.

For instance, in a simple approach, the degree of reliability may be associated with one of two reliability classes based on the respective source of information, the first sourced from a pre-trained machine learning model and the second sourced from an up-to-date internet source (e.g., API). Additionally, for instance, a third class may correspond to a pre-trained machine learning model run offline, e.g., locally on the apparatus performing and/or controlling the method according to the first example aspect.

According to an embodiment of the first example aspect, the indication of the degree of reliability is obtained by at least one of (e.g., only one of):
- determining the degree of reliability (e.g., by the apparatus performing and/or controlling the method according to the first example aspect), in particular based on the source of information, or
- receiving (e.g., together with information) the degree of reliability, in particular from the source of information.

The degree of reliability may for instance correspond to (e.g., be synonymous and/or identical to) (e.g., an indication of) the source of information. E.g., through determining from which source of information the piece of information comes from (e.g., which may be implicit to an obtaining of the piece of information), the degree of reliability may be (e.g., implicitly) obtained (e.g., without further indication of a degree of reliability).

Additionally or alternatively, the degree of reliability may for instance be determined (e.g., not (e.g., only) received but determined through at least one processing step performed, e.g., by the apparatus performing and/or controlling the method according to the first example aspect). For instance, a degree of reliability may be determined based on the (e.g., type of) source of information.

For instance, the determining may be based on at least one of a historical reliability of (e.g., based on previous pieces of information obtained from) a respective source of information, a type of source of information (e.g., pre-trained machine learning model vs. up-to-date internet source) and/or a type of map element (e.g., indicative of a speed of outdating).

For instance, additionally or alternatively, the degree of reliability may be received (e.g., together with the piece of information), e.g., from the source of information, e.g., as an additional piece of information.

According to an embodiment of the first example aspect, the degree of reliability is (e.g., further, e.g., in addition to being based on the source of information) (e.g., determined, e.g., by the apparatus) based on a respective type (e.g., recency requirement) of the map element (e.g., wherein different types of map elements (e.g., are known or determined to) outdate at different rates) and/or on a respective type (e.g., recency requirement) of the piece of information.

The degree of reliability may thus be determined at least in part based on a type (e.g., and/or recency requirement) of map element to which the piece of information belongs.

It has been recognized that a degree of reliability may be dependent on both a (e.g., level of recency of information obtained from a respective) source of information (e.g., which may provide outdated information) and at the same time on a recency requirement of a given map element and/or of a piece of information. For instance, information associated with certain map elements may outdate slowly (e.g., permanent exhibition in a large museum) or even barely (e.g., seasons for visiting an area with red-colored autumn leaves), information associated with other map elements may outdate quickly (e.g., traffic information, restaurant lunch menus).

The degree of reliability may additionally or alternatively be determined at least in part on a type (e.g., and/or recency requirement) of a respective piece of information.

Different (e.g., types of) pieces of information (e.g., of a same and/or respective map element) may differ in their recency requirement. For instance, a location of a museum may outdate slower (or not at all) compared to its changing exhibitions. Different degrees of reliability may be determined for different pieces of information for a same map element and a same source of information.

According to an embodiment of the first example aspect, the type (e.g. recency requirement) of the map element is at least one of
- a user-defined (e.g., by a the user of the apparatus) type (e.g. recency requirement) of map elements (e.g., group of points of interest), in particular map elements for which a type-specific source of information exists (e.g., a corporate database for (e.g., verified) landmarks; e.g., (e.g., only) available for a subgroup of users of a navigation system),
- pre-defined, in particular corresponding to at least one of a restaurant, a store, a monument, a museum, a sports venue (e.g., stadium or sports club), a concert venue, a park, a parking occasion (e.g., parking lot), a shopping district and/or combinations thereof, or
- classified based on a speed of outdating, in particular wherein the speed of outdating is at least one of pre-determined or (e.g., automatically) learned, in particular learned based on historical data and/or on at least one comparison between information sourced from a (e.g., the) pre-trained machine learning model and from an up-to-date internet source.

According to an embodiment of the first example aspect, the type (e.g. recency requirement) of a respective (e.g., the) piece of information is at least one of
- a user-defined (e.g., by a the user of the apparatus) type (e.g. recency requirement) piece of information,
- pre-defined, in particular corresponding to traffic, opening hours, menus, time tables of public transport, occupancy of areas and/or buildings, parking availability, availability of sharing services (e.g., bike, scooter, and/or car), or
- classified based on a speed of outdating, in particular wherein the speed of outdating is at least one of pre-determined or (e.g., automatically) learned, in particular learned based on historical data and/or on at least one comparison between information sourced from a (e.g., the) pre-trained machine learning model and from an up-to-date internet source.

A user may for instance configure preferences according to their needs. For instance, a user may know that a certain part (e.g., street and/or availability of parking space) of their daily commute is highly fluctuating and thus may configure a high recency requirement.

It has further been recognized (e.g., to minimize configuration effort) that types of map elements and/or pieces of information may be pre-configured with a recency requirement, for instance based on a comparatively homogeneous level of recency across map elements and/or pieces of information of this given type.

For instance, map elements and/or pieces of information may further be (e.g., automatically) classified, e.g., based on a speed of outdating. For instance, historical data of pieces of information (e.g., of map elements) and/or historical data of map elements may be analyzed (e.g., automatically) to determine classes of pieces of information and/or of map elements with certain (e.g., automatically defined) recency requirements. For instance, a rate of change of pieces of information (e.g., of map elements) in historical data may be utilized as a basis to determine a recency requirement. E.g., a high rate of change may indicate a high recency requirement of a given type of map element and/or type of piece of information.

Additionally or alternatively, different sources of information may be compared (e.g., on same pieces of information and/or same map elements). In case of discrepancies (e.g., based on a level and/or occurrence rate of discrepancies) between sources of information, a type of map element and/or piece of information may be associated with a certain recency level (e.g., in case of many discrepancies, a high recency requirement may be set).

According to an embodiment of the first example aspect, at least one of:
- the piece of information is provided visually (e.g., to a user) as a display element (e.g., wherein the display element corresponds to at least one of a text, a symbol, an icon, or an image; e.g., wherein the display element is embedded into a map representation, e.g., as part of a route, e.g., displayed to a user) and the way indicating the degree of reliability corresponds to at least one of
   - a color of the display element (e.g., green for internet source (e.g., API), red for machine learning mode (e.g., corpus data)),
   - a shape of the display element,
   - a size of the display element,
   - an additional reliability-indicating display element,
   - an animation of the display element,
   - a position on a screen of the display element, or
   - if the display element comprises text, a font of at least a part of the text, a color, a background color, an additional icon and/or an added character (e.g., an asterisk, an hourglass, a "live" symbol),
- the piece of information is provided auditorily as an audio cue and the way indicating the degree of reliability corresponds to at least one of
   - a voice-selection (e.g., tone, loudness, speed of delivery, hesitancy, pitch and/or combinations thereof) of a (e.g., artificial) speaker, or
   - an additional qualifier (e.g., additional "perhaps" or the like).

By visually or auditorily indicating a reliability, a user is informed whether they can rely on a piece of information and may navigate based on such a piece of information.

Visually, reliability may be indicated by various means and/or their combination as listed. It has been recognized that users may additionally or alternatively to visual indicators utilize navigation systems based on audio cues. For instance, an artificially created voice may indicate a route and/or an element of a route in a certain way and may thereby indicate auditorily as well, whether a piece of information of a map element relevant to the route is reliable or not.

According to an embodiment of the first example aspect, it is propose that the method further comprises at least one of
- alerting a user (e.g., of the apparatus) of the piece of information being outdated in case the degree of reliability of the piece of information is determined (e.g., of the apparatus) to be critical (e.g., category outdated), or
- offering (e.g., in real time) (e.g., and/or automatically triggering, e.g., based on user selecting or considering (e.g., for a prolonged period of time of at least e.g., 1s, 2s, 5s, 10s, 15s, 30s or 1min) a map element as a destination or as part of a route), in case the degree of reliability of the piece of information is determined (e.g., of the apparatus) to be critical, a verification step or an updating step of the piece of information based on information from an up-to-date internet source (e.g., wherein the apparatus is further configured to indicate a pending verification).

Informing the user of a reliability of information (e.g., of potentially outdated information case of a low reliability) may be sufficient in avoiding the user relying on pieces of information which are incorrect and thus may avoid the user making bad navigation choices.

The proposed embodiment goes beyond the mere informing of the user but proposes (e.g., at least) to alert the user (e.g., actively) when a piece of information is of low reliability (e.g., critical reliability).

The alerting may for instance be performed when a user considers and/or elects a certain map element as a part of a route and/or as a destination for a route.

Alerting may for instance be performed by means of a display element such as for instance a pop-up, a banner, a colored frame (e.g., around a map element and/or around a displayed map and/or combinations thereof. Additionally or alternatively, alerting may for instance be performed by means of an audio cue such as for instance a signal tone and/or a verbal cue. An alert may be specific to a respective map element (e.g., to the map element) and/or to a respective piece of information (e.g., the piece of information).

The method may further go beyond alerting and may (e.g., additionally or alternatively; e.g., conditionally on a preceding alerting) for instance comprise presenting an opportunity to verify and/or update a piece of information. For instance, a respective button and/or interactive element may be presented to the user and/or an audio cue of the user may be offered (e.g., "Please say 'verify' /'update' to cause updating of information on map elements.") which may trigger the verification and/or update. An offer for verification and/or update may be specific to a respective map element (e.g., to the map element) and/or to a respective piece of information (e.g., the piece of information).

A verification and/or update may subsequently be performed on at least one map element and/or at least one piece of information on at least one map element. For instance, verification and/or update may be performed on multiple pieces of information and/or map elements, e.g., to all (e.g., pieces of information of) map elements of a route (e.g., and/or neighboring map elements), in particular those of critical reliability.

The method may thus comprise offering (e.g., in real time) a verification step or an updating step of the piece of information (e.g., and/or further pieces of information, e.g., of one or more map elements). An updating and/or verifying may be based on information from an up-to-date internet source.

The updating and/or verifying may be performed conditionally on a user triggering such updating and/or verifying, e.g., by providing at least one command (e.g., voice command and/or textual input and/or using a button).

Additionally or alternatively, the update and/or verification may be automatically triggered. For instance, if the user of the apparatus performing and/or controlling the method according to the first example aspect selects or considers (e.g., for a prolonged period of time of at least e.g., 1s, 2s, 5s, 10s, 15s, 30s or 1min) a map element, e.g., as a destination or as part of a route, the update and/or verification may be triggered. Additionally or alternatively, the update and/or verification may be automatically triggered in case the degree of reliability of the piece of information is determined (e.g., of the apparatus) to be critical (e.g., without first alerting the user).

For instance, the method may further comprise indicating a pending verification and/or update. The verification and/or updating may be pending while an up-to-date internet source is contact and appropriate information is retrieved. For instance, an indication of a pending verification and/or update may be displayed in addition to and/or alternative to an indication of a degree of reliability. For instance, a piece of information may be determined to be of low (e.g., critical) reliability which may automatically trigger an update and/or verification of the piece of information using an up-to-date internet source. In this case, the method may indicate (e.g., display) the pending verification and/or updating. Thereby, the user is informed that there is no need to trigger the update and instead reliable information is on its way and will soon by available.

According to an embodiment of the first example aspect, the degree of reliability of the piece of information is determined to be critical if the degree of reliability is at least one of:
- below a predefined threshold (e.g., outdated by more than a predefined acceptable threshold recency (e.g., dependent on a type of the map element)), or
- originating from the pre-trained machine learning model (e.g., in particular run offline and/or locally) (e.g., and additionally being of a type of map element which outdates quickly).

A reliability may be determined to be critical based on at least one (e.g. predefined) criterion. For instance, a reliability may be assessed to be critical if a (e.g., estimated, e.g., associated with the reliability; e.g., based on a type of the piece of information and/or the map element and/or the source of information) probability of the piece of information being outdated is above a pre-defined threshold (e.g., 0.1, 0.2, 0.3, 0.4, 0.5, 0.6., 0.7, 0.8, 0.9 or 0.95). Additionally or alternatively, the reliability may be assessed to be critical if a recency of a last update is below a (e.g., pre-defined) recency threshold (e.g., dependent on a type of the piece of information and/or the map element and/or the source of information). The recency threshold may for instance be defined as an acceptable time passed since a last update, e.g., 1d, 2d, 3d, 5d, 7d, 1w, 2w, 5w, 10w, 20w, 1y, 2y, 5y, or 10y. In case the last update is longer ago than the acceptable time, the piece of information may be determined to be of critical reliability.

Additionally or alternatively, a degree of reliability of pieces of information from certain sources of information may be deemed critical (e.g., independently of or additionally dependent on a type of piece of information and/or a type of map element). For instance, pieces of information originating from the pre-trained machine learning model (e.g., in particular if it is run offline and/or locally by the apparatus performing and/or controlling the method according to the first aspect) may be determined to be critical. This may for instance ensure that a verification and/or updating step is automatically performed for pieces of information of such sources.

According to an embodiment of the first example aspect, the piece of information may be first obtained by a pre-trained machine learning model. It has been recognized that pre-trained machine learning models (e.g., LLMs) are particularly dexterous in retrieving relevant aspects (e.g., pieces of information) of a given object (e.g., map element). For instance, while an up-to-date internet source may be queried for particular pieces of information, it may not be (e.g., in contrast the pre-trained machine learning model) able to propose relevant pieces of information. It has at the same time been recognized that training data of pre-trained machine learning models may be outdated and moreover such models may extrapolate and/or hallucinate properties about a given object (e.g., map element) which are not present and/or which are incorrect. Such pieces of information obtained from pre-trained machine learning models may thus require verification and/or update. By combining pre-trained machine learning models and up-to-date internet sources, a navigation system may automatically retrieve numerous pieces of information about map element (e.g., at least in part by virtue of a pre-trained machine learning mode; e.g., additionally from up-to-date internet sources), indicate which pieces of information are from what source and either offer or (e.g. automatically) trigger a verification and/or update of pieces of information obtained from the pre-trained machine learning model. The database for navigating the outside world based on embodiments of the present disclosure is thus particularly complete while the user stays informed about reliability of information and through transparent source indication and updating based on reliable sources.

According to an embodiment of the first example aspect, the (e.g., or one of at least two available) pre-trained machine learning model is run locally on the apparatus performing and/or controlling the method according to the first aspect.

For instance, local machine learning models such as (e.g., distilled, e.g., pruned) large language models, may be run locally on the apparatus. For instance, this may be the case if connectivity to the internet is (e.g., temporarily) interrupted, e.g., when passing through a tunnel or being positioned inside an elevator. In particular in this case, training data may be outdated and/or model performance may be low.

According to an embodiment of the first example aspect, if the pre-trained machine learning model is run locally on the apparatus (e.g., due to connectivity issues) at least one of
- the degree of reliability is lowered (e.g., by the apparatus) compared to a pre-trained machine learning model run online, or
- the way indicating the degree of reliability is adapted to additionally indicate an offline use of the pre-trained machine learning model, or
- the apparatus further comprises identifying at least one or more map elements to be updated using an up-to-date internet source (e.g., one an internet connection is re-established).

For instance, a reliability of a piece of information obtained from a pre-trained machine learning model run offline may be set to a lower (e.g., critical) reliability rating. The offline-model may be indicated to the user (e.g., similarly to the degree of reliability, e.g., by a respective icon). For instance, a piece of information obtained from an offline pre-trained machine learning model may be (e.g., automatically) updated and/or verified, e.g., by an online pre-trained machine learning model and/or by an up-to-date internet source. The updating and/or verifying may for instance be performed one online-resources may be available (e.g., after a phase of the apparatus being offline). For instance, a pending update and/or verification may be indicated (e.g., automatically), e.g., until the update and/or verification has been performed.

According to an embodiment of the first example aspect, it is proposed that the method further comprises ranking (e.g., and/or filtering) a plurality of map elements by their respective degree of reliability, in particular further comprising suggesting (e.g., providing an indication of), based on the ranking (e.g., and/or filtering), at least one or more map elements as potential destinations.

Reliability of pieces of information may form a (e.g., one of multiple) basis for determining a potential destination. For instance, if one destination has associated pieces of information which make it a suitable destination (e.g., restaurant with a favorable customer rating and reasonable prices), this information may only be relevant to a destination search if the information is reliable. For instance, if the pieces of information is outdated (e.g., at least one year old), the kitchen may have changed and/or prices may have gone up.

Therefore, it may be advantageous to rank (e.g., additionally to other factors such as a filtering by type of map element and/or by suitable opening hours, a ranking by rating and/or prices and/or combinations thereof) map elements according to how reliably their pieces of information are.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1a,b: schematic visualizations of an apparatus and method according to all example aspects of the present invention;
- Fig. 2a,b: schematic visualizations of methods according to all example aspects of the present invention;
- Fig. 3: a schematic visualization of reliability determination according to all example aspects of the present invention;
- Fig. 4: a schematic visualization of ranking or map elements according to all example aspects of the present invention;
- Fig. 5: a schematic visualization of methods according to all example aspects of the present invention;
- Fig. 6: a flowchart showing an example embodiment of a method according to the first example aspect of the present invention;
- Fig. 7: a schematic block diagram of an apparatus configured to perform the method according to the first example aspect of the present invention;
- Fig. 8: a schematic illustration of examples of tangible and non-tangible storage media according to the present invention.

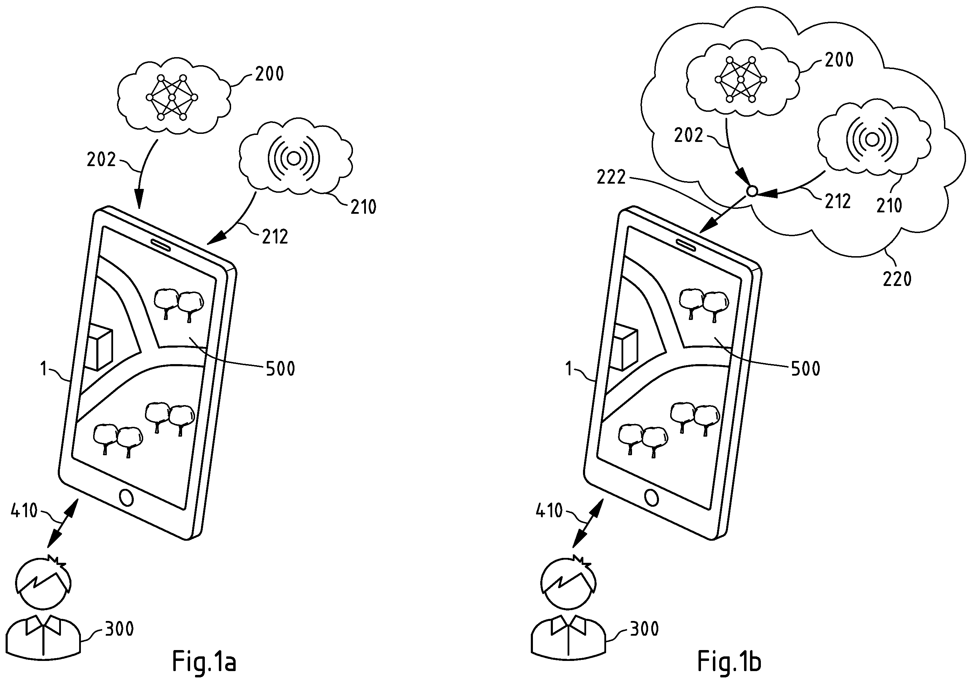

Fig. 1a,b demonstrate a first apparatus 1, e.g., according to the first example aspect. The first apparatus 1 may interact with a user 300, e.g., by an interaction 410. The first apparatus 1 may for instance display a map as shown in the embodiment. The map may for instance show map elements such as streets, landscape elements such as trees, buildings (e.g., stores) and/or combinations thereof. The map may show points of interest, POI, 500 for instance restaurants and/or leisure areas.

The apparatus 1 may obtain at least one piece of information about at least one map element from sources of information 200, 210. Such sources of information 200, 210 may comprise a pre-trained machine learning model 200 and an up-to-date internet source 210. The sources of information 200, 210 may at least partially be local (e.g., stored on a memory of the apparatus 1). Additionally or alternatively, the sources of information 200, 210 may be remote to the apparatus as shown. For instance, the apparatus 1 may obtain pieces of information from the sources of information 200, 210 may means of respective communication links 210, 202 (see Fig. 1a). Communication links may for instance be wireless and/or wired, in particular at least partially according to a cellular communication standard as defined by the 3GPP standardization partnership. Additionally or alternatively (see Fig. 1b), pieces of information may be obtained from the sources of information 200, 210 in a combined way, e.g., by intermediary of an information aggregating entity 220 such as a map information provider 220.

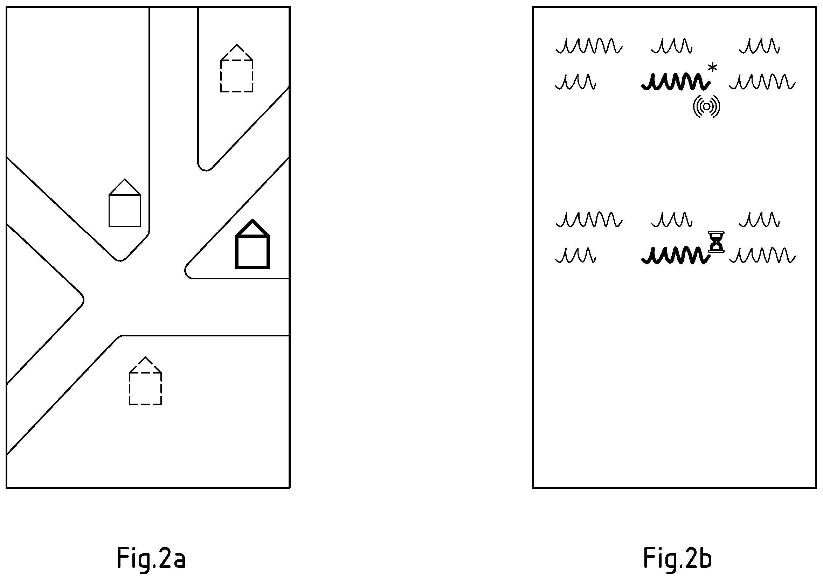

Fig. 2a,b shows examples of a presentation of map elements on a display (e.g., of an apparatus performing and/or controlling the method according to the first example aspect) to a user.

**In** Fig. 2a, the map elements may be displayed on a map comprising road links. The example map elements comprise buildings which may for instance correspond to POIs, e.g., to restaurants. The example shows a way of indicating a degree of reliability of pieces of information about the respective map elements. For instance, a low degree of reliability (e.g., obtained from offline pre-trained machine learning model and/or last updated 1 year ago) may be indicated by means of a dashed contour, an intermediate degree of reliability (e.g., based on online pre-trained machine learning model) may be indicated by means of a solid contour and a high degree of reliability (e.g., piece of information obtained from an up-to-date online resource shortly before presenting the map element on the screen) may be indicated by means of a thick solid contour.

Fig. 2b shows an example in which map elements are displayed as text. Text may for instance follow a comparable scheme of indicating reliability compared to visually differentiating map elements by reliability in Fig. 2a. The bold font used for a word within the displayed text may for instance be colored red to indicate that the corresponding piece of information originates from a pre-trained machine learning model and may be of low reliability. **In** the upper lines, additionally to the bold font, an asterisk and a "live" symbol (small circle with partial circle pieces of two radii around it) is shown. For instance, the "live" symbol may indicate a possibility to update the corresponding piece of information (e.g., by the user touching their screen at the position of the display element corresponding to the piece of information and/or by using a different button and/or by using a voice command). For instance, additionally or alternatively, an update and/or verification may be performed automatically. For instance, a user may, by selecting particular map elements to update, trigger an early update.

During updating and/or verification (e.g., and/or additionally in a phase during which no update and/or verification is possible, e.g., during a phase in which the apparatus is offline), a pending update and/or verification may be indicated, for instance by means of an hourglass symbol as shown.

A degree of reliability of a piece of information of a map element may correspond to the source of information (e.g., pre-trained machine learning model vs. up-to-date information source). Additionally or alternatively, a degree of reliability may be determined based on a type of map element and/or a type of piece of information.

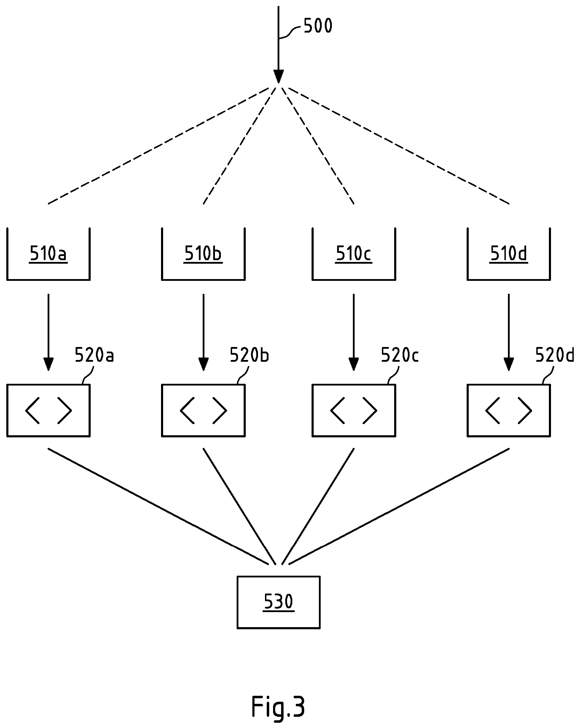

Fig. 3 shows an example procedure of determining the degree of reliability based on a type of map element. A similar procedure may be adopted based on a type of piece of information.

A map element 500 may be classified into a type of map element 510a, 510b, 510c, 510d. For instance, the types 510a, 510b, 510c, 510d may be pre-defined, user-defined and/or learned (e.g., based on historical data). For instance, a respective type may correspond to forests 510a, monuments 510b, restaurants 510c and parking spaces 510d. For a respective type of map element, a respective rule 520a, 520b, 520c, 520d may be defined that is used for determining the degree of reliability 530. For instance, a simple example rule may be based on a time passed since the last update available from respective source of information. For instance, if a piece of information on a forest 510a has been updated not more than 5 years ago, this information may still be deemed reliable. If a piece of information on a monument 510b has been updated not more than 1 year ago, this information may still be deemed reliable. If a piece of information on a restaurant 510c has been updated not more than 1 months ago, this information may still be deemed reliable. If a piece of information on a parking space 510d has been updated not more than 1 hour ago, this information may still be deemed reliable. Alternative rules may be applicable, for instance based on the source or information. For instance, information retrieved from a pre-trained machine learning model may be deemed reliable for map elements of type 520a and 520b, yet unreliable for map elements of type 520c and 520d. Factors such as last update time and/or source of information may be combined.

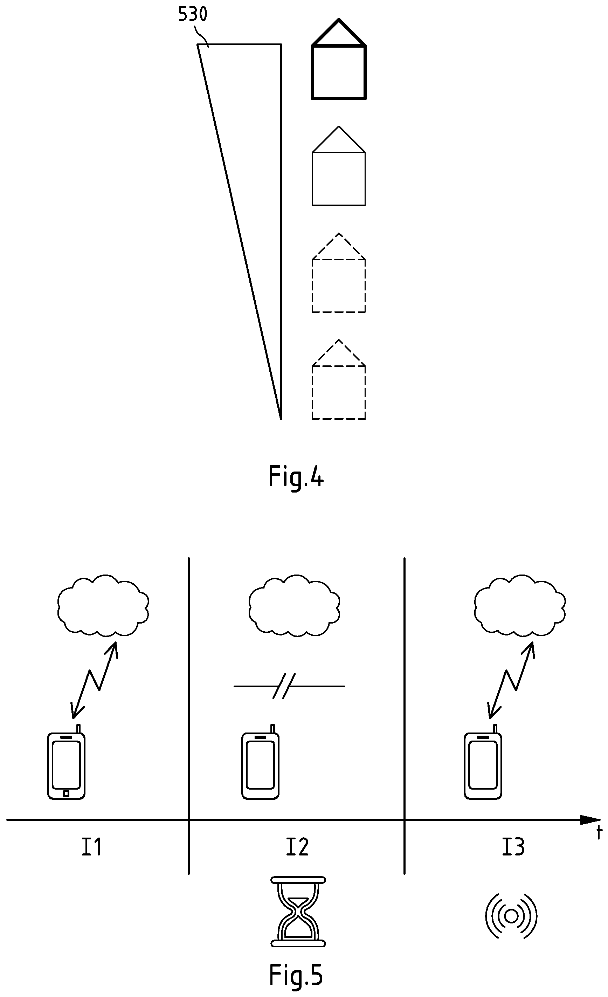

Fig. 4 shows a ranking of map elements by a degree of reliability 530. The usage of line style may correspond to Fig. 2a, i.e., thick solid contour lines correspond to a high degree of reliability, solid thin lines to an intermediate degree and dashed lines to a low degree of reliability. A map element may for instance be proposed at least partially based on the reliability 530.

Fig. 5 shows a sequence of connectivity states of an apparatus (shown as a mobile station) with the internet (shown as a cloud). During a first phase I1, the apparatus is connected to the internet. It may thus access up-to-date internet sources and/or online pre-trained machine learning models. In a second phase I2, the apparatus is cut from the internet. It may in this case for instance only have access to locally stored information, in particular to a locally run pre-trained machine learning model. At least some pieces of information obtained in this phase I2 may be deemed unreliable (e.g., low or critical degree of reliability). For instance, an automatic update and/or verification may be triggered as soon as the apparatus is connected to the internet again. The user may be displayed an indication of a pending and/or upcoming update and/or verification, e.g., by an hourglass symbol. In phase I3, the apparatus is connected again. Now, pending updates and/or verifications may be performed. The user may be informed about finished updates, e.g., by means of an indication such as the "live" symbol displayed below the x-axis in phase I3.

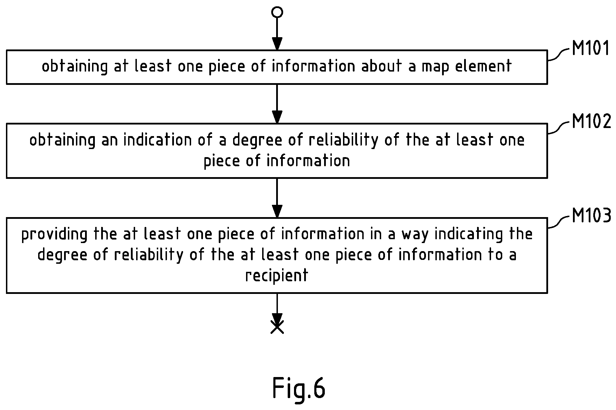

Fig. 6 is a flow diagram illustrating the method according to the first example aspect, for instance performed and/or controlled by an apparatus according to the first aspect.

A step M101 comprises obtaining at least one piece of information about a map element (e.g., traffic state (e.g., construction works), a point of interest (e.g., opening hours of a destination, prices of entrance and/or products and/or combinations thereof)), wherein the at least one piece of information is obtained based on (e.g., from) a source of information. The source of information corresponds to one of a pre-trained machine learning model (e.g., a large language model), in particular wherein the respective of the at least one piece of information is based (e.g., corresponds to) on training data (e.g., corpus data) of a given recency, or an up-to-date (e.g., updated at most 3M, 2M, 1M, 4w, 2w, 1w, 5d, 2d, or 1d ago)(e.g., wherein the information is requested in real time) internet source (e.g., obtained via an application programming interface, API; e.g., API-sourced).

A step M102 comprises obtaining (e.g., jointly with the information) an (e.g., respective of a piece of information of the at least one piece of information) indication of a degree of reliability of the at least one piece of information based on the source of information.

A step M103 comprises providing the at least one piece of information in a way indicating the degree of reliability of the at least one piece of information to a recipient.

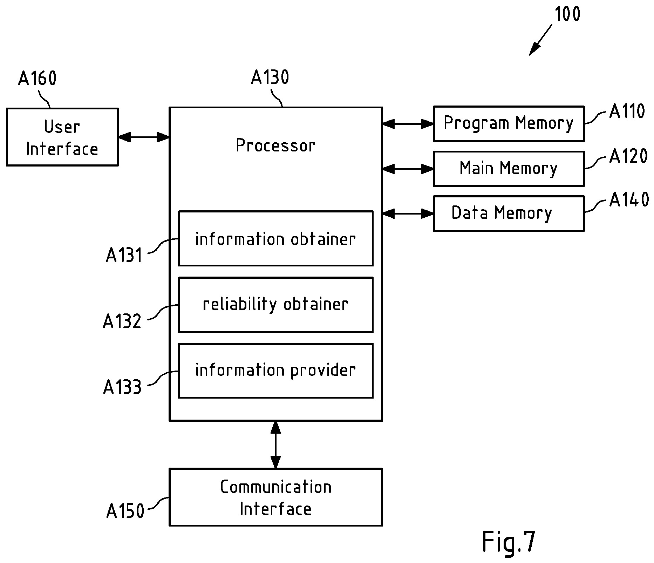

Fig. 7 shows an example block diagram of an apparatus 100 (e.g., performing and/or controlling a method according to the first example aspect, e.g., a mobile device). The apparatus 100 may perform a method according to the first example aspect. The apparatus may comprise a user interface A160, a program memory A110, a main memory A120, and a data memory A140. Further, it comprises a processor A130. The apparatus 100 may further comprise the functional units information obtainer A131 (e.g., corresponding to method step M101 of Fig. 5), a reliability obtainer A132 (e.g., corresponding to method step M102 of Fig. 5), an information provider A133 (e.g., corresponding to method step M103 of Fig. 5). A functional unit may for instance correspond to a code block within a memory A110, A120, A140. The functional units A131, A132, A133 may for instance be (e.g., respectively) connected to and/or control the communication interface A150.

Processor A110 (and also any other processor mentioned in this specification) may be a processor of any suitable type. Processor A110 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor A110 may for instance be an application processor that runs an operating system.

Program memory A130 may also be included into processor A110. This memory may for instance be fixedly connected to processor A110, or be at least partially removable from processor A110, for instance in the form of a memory card or stick. Program memory A130 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory A130 may also comprise an operating system for processor A110. Program memory A130 may also comprise a firmware for the respective apparatus.

Working memory A120, may for instance take the form of a volatile memory. It may for instance be a Random Access Memory (RAM) or Dynamic RAM (DRAM), to give but a few non-limiting examples. It may for instance be used by processor A110 when executing an operating system and/or computer program.

Data memory A140 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory A140 may for instance store interactions and/or a user context, to name non-limiting example.

Communication interface(s) A150 enable communication with other entities. The communication interface(s) A150 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable the respective apparatus to communicate with other entities.

User interface A160 is optional and may comprise a display for displaying information to a user and/or an input device (e.g. a keyboard, keypad, touchpad, mouse, etc.) for receiving information from a user.

Some or all of the components of the respective apparatus may for instance be connected via a bus. Some or all of the components of the apparatus 1 may for instance be combined into one or more modules.

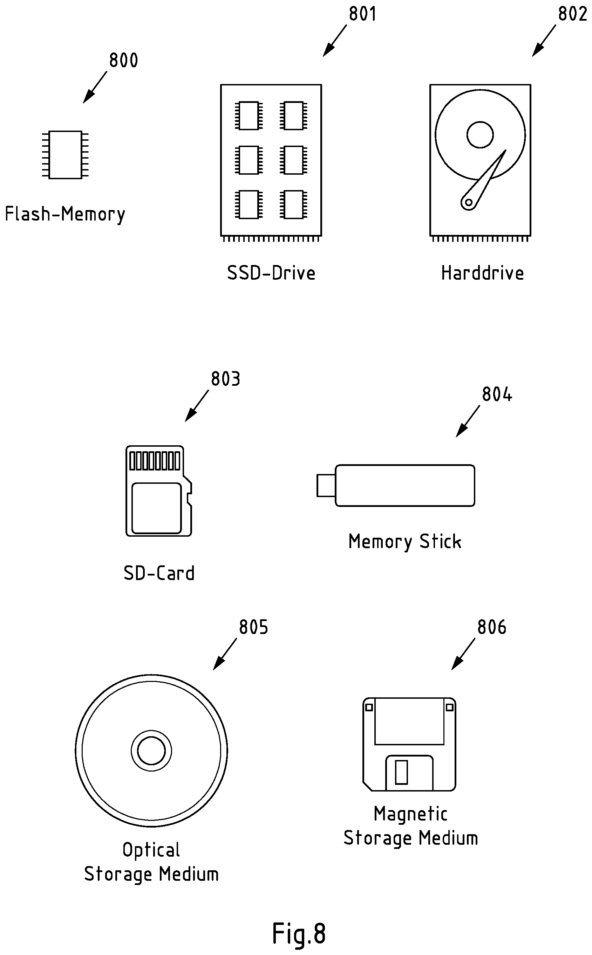

Fig. 8 is a schematic illustration of examples of tangible and non-transitory computer-readable storage media according to the present invention that may for instance be used to implement one or more of the memories A110, A120, A140 of Fig. 7. To this end, Fig. 8 displays a flash memory 800, which may for instance be soldered or bonded to a printed circuit board, a solid-state drive 801 comprising a plurality of memory chips (e.g. Flash memory chips), a magnetic hard drive 802, a Secure Digital (SD) card 803, a Universal Serial Bus (USB) memory stick 804, an optical storage medium 805 (such as for instance a CD-ROM or DVD) and a magnetic storage medium 806.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. An apparatus, comprising:
- means for obtaining at least one piece of information about a map element, wherein the at least one piece of information is obtained based on a source of information, wherein the source of information corresponds to one of:
- a pre-trained machine learning model, in particular wherein the respective of the at least one piece of information is based on training data of a given recency, or
- an up-to-date internet source,
- means for obtaining an indication of a degree of reliability of the at least one piece of information based on the source of information, and
- means for providing the at least one piece of information in a way indicating the degree of reliability of the at least one piece of information to a recipient.

2. The apparatus according to claim 1, wherein the at least one piece of information comprises at least two or more pieces of information, in particular wherein the at least two or more pieces of information relate to a single map element, wherein a respective indication of a respective degree of reliability is obtained for a respective of the pieces of information.

3. The apparatus according to claim 1 or 2, wherein the map element is part of a route to a destination.

4. The apparatus according to any of claims 1 to 3, wherein the recipient is at least one of
- a user of the apparatus, or
- a part of a computer system.

5. The apparatus according to any of claims 1 to 4, wherein the indication of the degree of reliability at least one of
- corresponds to the source of information, or
- is classified into one of three reliability classes comprising
- from internet source,
- from pre-trained machine learning model, and
- outdated.

6. The apparatus according to any of claims 1 to 5, wherein the indication of the degree of reliability is obtained by at least one of:
- determining the degree of reliability by the apparatus, in particular based on the source of information, or
- receiving the degree of reliability, in particular from the source of information.

7. The apparatus according to any of claims 1 to 6, wherein the degree of reliability is based on a type of the map element.

8. The apparatus according to claim 7, wherein the type of the map element is at least one of
- a user-defined type of map elements, in particular map elements for which a type-specific source of information exists,
- pre-defined, in particular corresponding to at least one of a restaurant, a store, a monument, a museum, a sports venue, a concert venue, a park, a parking occasion, a shopping district and/or combinations thereof, or
- classified based on a speed of outdating, in particular wherein the speed of outdating is at least one of pre-determined or learned, in particular learned based on historical data and/or on at least one comparison between information sourced from a pre-trained machine learning model and from an up-to-date internet source.

9. The apparatus according to any of claims 1 to 8, wherein at least one of:
- the piece of information is provided visually as a display element and the way indicating the degree of reliability corresponds to at least one of
- a color of the display element,
- a shape of the display element,
- a size of the display element,
- an additional reliability-indicating display element,
- an animation of the display element,
- a position on a screen of the display element, or
- if the display element comprises text, a font of at least a part of the text, a color, a background color, an additional icon and/or an added character,
- the piece of information is provided auditorily as an audio cue and the way indicating the degree of reliability corresponds to at least one of
- a voice-selection of a speaker, or
- an additional qualifier.

10. The apparatus according to any of claims 1 to 9, further comprising at least one of
- means for alerting a user of the piece of information being outdated in case the degree of reliability of the piece of information is determined to be critical, or
- means for offering, in case the degree of reliability of the piece of information is determined to be critical, a verification step or an updating step of the piece of information based on information from an up-to-date internet source.

11. The apparatus according to claim 10, wherein the degree of reliability of the piece of information is determined to be critical if the degree of reliability is at least one of:
- below a predefined threshold, or
- originating from the pre-trained machine learning model.

12. The apparatus according to any of claims 1 to 11, wherein the pre-trained machine learning model is run locally on the apparatus.

13. The apparatus according to any of claims 1 to 12, wherein if the pre-trained machine learning model is run locally on the apparatus at least one of
- the degree of reliability is lowered compared to a pre-trained machine learning model run online, or
- the way indicating the degree of reliability is adapted to additionally indicate an offline use of the pre-trained machine learning model, or
- the apparatus further comprises means for identifying at least one or more map elements to be updated using an up-to-date internet source.

14. The apparatus according to any of claims 1 to 13, further comprising means for ranking a plurality of map elements by their respective degree of reliability, in particular further comprising means for suggesting, based on the raking, at least one or more map elements as potential destinations.

15. A method comprising:
- obtaining at least one piece of information about a map element, wherein the at least one piece of information is obtained based on a source of information, wherein the source of information corresponds to one of:
- a pre-trained machine learning model, in particular wherein the respective of the at least one piece of information is based on training data of a given recency, or
- an up-to-date internet source,
- obtaining an indication of a degree of reliability of the at least one piece of information based on the source of information, and
- providing the at least one piece of information in a way indicating the degree of reliability of the at least one piece of information to a recipient.

16. A computer program, the computer program when executed by a processor causing an apparatus to perform and/or control the actions and/or steps of the method of claim 15.
